(19) Europäisches Patentamt
European Patent Office
Office européen des brevets

(11) EP 4 534 609 A1

(12) # EUROPEAN PATENT APPLICATION
published in accordance with Art. 153(4) EPC

(43) Date of publication:
**09.04.2025 Bulletin 2025/15**

(21) Application number: **23811704.8**

(22) Date of filing: **17.05.2023**

(51) International Patent Classification (IPC):
***C08L 101/12** (2006.01)* ***C08K 5/13** (2006.01)*
***C08L 1/00** (2006.01)* ***C08L 71/02** (2006.01)*
***C08L 79/00** (2006.01)* ***H01B 1/12** (2006.01)*
***H01B 1/20** (2006.01)* ***H01B 5/14** (2006.01)*
***H01G 9/028** (2006.01)* ***H01G 9/15** (2006.01)*
***H01G 11/56** (2013.01)* ***H01M 4/66** (2006.01)*

(52) Cooperative Patent Classification (CPC):
**C08K 5/13; C08L 1/00; C08L 71/02; C08L 79/00; C08L 101/12; H01B 1/12; H01B 1/20; H01B 5/14; H01G 9/028; H01G 9/15; H01G 11/56; H01M 4/66;** Y02E 60/10

(86) International application number:
**PCT/JP2023/018413**

(87) International publication number:
**WO 2023/228831 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.05.2022 JP 2022084527**

(71) Applicant: **Idemitsu Kosan Co.,Ltd.**
**Tokyo 100-8321 (JP)**

(72) Inventor: **ONODERA, Shingo**
**Tokyo 100-8321 (JP)**

(74) Representative: **Gille Hrabal Partnerschaftsgesellschaft mbB**
**Patentanwälte**
**Brucknerstraße 20**
**40593 Düsseldorf (DE)**

(54) **COMPOSITION, ELECTROCONDUCTIVE FILM, CAPACITOR, AND BATTERY**

(57) A composition including (a) a conductive polymer, (b) a phenolic compound, (c) a thickener, and (d) a solvent.

EP 4 534 609 A1

## Description

### Technical Field

The present invention relates to a composition, a conductive film, a capacitor and a battery.

### Background Art

A conductive polymer is used as a solid electrolyte of a capacitor, an electromagnetic wave absorbing coating agent, an antistatic coating agent, an electroplating base material, a conductive ink for circuit wiring applications, and the like.

Polyaniline which is a kind of conductive polymer has advantages and properties that it can be relatively easily synthesized from inexpensive aniline and exhibits excellent stability against oxygen and the like in a state of exhibiting conductivity, in addition to its electrical properties.

It is possible to easily obtain highly conductive polyaniline by the method described in Patent Document 1.

The conductive polymers are generally insoluble and difficult to mold. In recent years, a water-dispersible or organic solvent-soluble conductive polymer has been developed, which is easy to mold and process, and forms a conductive polymer film by coating, printing, and the like, and provides various functionalities.

### Related Art Documents

### Patent Documents

[Patent Document 1] WO 2012/102017 A1

### Summary of the Invention

An object of the present invention is to provide a composition capable of obtaining an excellent viscosity improvement exceeding the effect of simply adding a thickener, a conductive film, a capacitor and a battery.

There is a viscosity suitable for the application process and the printing method, and, generally in order to adjust the viscosity, the concentration of the conductive polymer and the composition of the solvent need to be changed. In this case, the viscosity increases when the concentration of the conductive polymer is increased, but the material is more costly and is not practical. In addition, the viscosity decreases when the concentration is decreased, but it becomes a very thin coating film, has low durability, and has high resistivity, which is not also practical.

In addition, a large amount of a binder may be blended to increase the viscosity, but in this case, the conductivity of the obtained coating film is significantly reduced.

The present inventors have found a composition capable of obtaining a conductive film controlling a wide range of viscosity and maintaining conductivity in a practical range, and have arrived at the invention.

According to the present invention, the following composition and the like are provided.

1. A composition comprising

   (a) a conductive polymer,
   (b) a phenolic compound,
   (c) a thickener, and
   (d) a solvent.

2. The composition according to 1, wherein the component (a) is a polyaniline complex in which a substituted or unsubstituted polyaniline is doped with a proton donor.
3. The composition according to 2, wherein the proton donor is a proton donor represented by the following formula (I):

$$M(XARn)m \qquad (I)$$

wherein in the formula (I), M is a hydrogen atom, an organic radical group or an inorganic radical group;

X is an acidic group; A is a hydrocarbon group which may contain a substituent;
R is independently a substituent represented by $-R^1$, $-OR^1$, $-COR^1$, $-COOR^1$, $-CO(COR^1)$, or $-CO\ (COOR^1)$;
$R^1$ is a hydrocarbon group which has 4 or more carbon atoms and which may contain a substituent, a silyl group,

an alkylsilyl group, a group represented by $-(R^2O)_x-R^3$, or a group represented by$-(OSiR^3{}_2)_x-OR^3$ (wherein $R^2$ is an alkylene group, $R^3$ is independently a hydrocarbon group which may be the same as or different from each other, and x is an integer of 1 or more);
n is an integer of 2 or more; and
m is the valence of M.

4. The composition according to any one of 1 to 3, wherein the amont of the component (c) is 0.1% by mass or more based on 100% by mass of the entire composition.
5. The composition according to any one of 1 to 4, wherein the mass ratio of the amount of the component (a) to the amount of the component (c) is 1:0.01 to 1:2.
6. The composition according to any one of 1 to 5, wherein the component (c) is a polyether-based compound or a cellulosic compound.
7. The composition according to any one of 1 to 6, wherein the viscosity thereof is 2 to 1,000 mPa·s.
8. A conductive film formed using the composition according to any one of 1 to 7.
9. A capacitor comprising the conductive film according to 8.
10. A battery comprising the conductive film according to 8.

According to the present invention, it is possible to provide a composition capable of obtaining an excellent viscosity improvement exceeding the effect of simply adding a thickener, a conductive film, a capacitor and a battery.

Brief Description of the Drawings

Fig. 1 is a diagram illustrating a top surface of a glass substrate having indium-tin-oxide (ITO) electrodes formed thereon, as used in Example 1.
Fig. 2 is a diagram illustrating a top surface of a glass substrate exposed on the surface of the terminal of ITO electrode by scraping the conductive film prepared in Example 1.
Fig. 3 is a diagram illustrating the synergistic effect of component (b) and component (c).

Mode for Carrying out the Invention

[Composition]

A composition according to an aspect of the present invention includes

(a) a conductive polymer (hereinafter, also referred to as "component (a)"),
(b) a phenolic compound (hereinafter also referred to as "component (b)"),
(c) a thickener (hereinafter, also referred to as "component (c)"), and
(d) a solvent (hereinafter, also referred to as "component (d)").

As a result, it is possible to obtain an excellent viscosity improvement exceeding the effect of simply adding the thickener.
In addition, as an arbitrary effect, it is possible to achieve both the conductivity (for example, 0.5 S/cm or higher) of the obtaining conductive film and the viscosity of the composition.
The viscosity of the composition according to an aspect of the present invention is, for example, 1 to 500 mPa·s, 2 to 500 mPa·s, 3 to 400 mPa·s, 5 to 300 mPa·s, 1 to 1,000 mPa·s, 2 to 1,000 mPa·s, 3 to 700 mPa·s, 10 to 500 mPa·s, or 16 to 200 mPa·s in terms of coatability.
The viscosity of the composition is measured using a sine-wave vibro viscometer SV-1H (manufactured by A&D Company, Limited).
Hereinafter, each component will be described.

(Component (a): conductive polymer)

Examples of the conductive polymer include polyaniline, polythiophene, polypyrrole and derivative thereof. These may or may not have a substituent. These may be used alone, or two or more kinds thereof may be used in combination.
As the conductive polymer, polyaniline is preferable.

The polyaniline preferably has a weight average molecular weight of 10,000 or more, more preferably 20,000 or more, still more preferably 30,000 or more and 1,000,000 or less, still more preferably 40,000 or more and 1,000,000 or less, and particularly preferably 52,000 or more and 1,000,000 or less.

The weight average molecular weight of the polyaniline is determined by the method described in the Examples.

The polyaniline may or may not have a substituent, but is preferably an unsubstituted polyaniline from the viewpoint of versatility and economic efficiency.

The substituent in the case where it has a substituent includes, for example, a linear or branched hydrocarbon group such as methyl group, ethyl group, hexyl group, and octyl group; an alkoxy group such as methoxy group, ethoxy group; an aryloxy group such as phenoxy group; and a halogen hydrocarbon such as trifluoromethyl group ($-CF_3$ group).

In addition, from the viewpoint of conductivity, a polyaniline complex in which a substituted or unsubstituted polyaniline is doped with a proton donor is preferable.

The doping of the proton donor into the polyaniline can be confirmed by ultraviolet, visible, and near-infrared spectroscopy or X-ray photoelectron spectroscopy, and the proton donor can be used without any particular chemical structural limitation as long as it has sufficient acidity to generate a carrier in the polyaniline.

It is preferable to use the polyaniline complex because the solubility in a solvent is improved.

The proton donor includes, for example, a Bronsted acid, or a salt thereof, preferably an organic acid or a salt thereof (e.g., a sulfonic acid or a salt of sulfonic acid), and more preferably, from the viewpoint of solubility, a proton donor represented by the following formula (I):

$$M(XAR_n)_m \qquad (I)$$

wherein in the formula (I), M is a hydrogen atom, an organic radical group, or an inorganic radical group;

X is an acidic group; A is a hydrocarbon group which may contain a substituent;
R is independently a substituent represented by $-R^1$, $-OR^1$, $-COR^1$, $-COOR^1$, $-CO(COR^1)$, or $-CO(COOR^1)$;
$R^1$ is a hydrocarbon group which has 4 or more carbon atoms and which may contain a substituent, a silyl group, an alkylsilyl group, a group represented by $-(R^2O)_x-R^3$, or a group represented by $-(OSiR^3{}_2)_x-OR^3$ (wherein $R^2$ is an alkylene group, $R^3$ is independently a hydrocarbon group which may be the same as or different from each other, and x is an integer of 1 or more);
n is an integer of 2 or more; and
m is the valence of M.

In the above formula (I), M is a hydrogen atom, an organic radical group or an inorganic radical group.

Examples of the organic radical group include a pyridinium group, an imidazolium group, and an anilinium group. Examples of the inorganic radical group include sodium, lithium, potassium, cesium, and ammonium.

X is an acidic group, and examples thereof include a group represented by$-SO_3^-$, $-PO_3^{2-}$ - $PO_4(OH)^-$, $-OPO_3^{2-}$ $-OPO_2(OH)^-$, $-COO^-$ and the like, and a group represented by$-SO_3^-$ is preferable.

A is a hydrocarbon group which may contain a substituent.

The hydrocarbon group may include a (n+1) valent group corresponding to, for example, a linear or branched alkyl group (e.g., an ethylene group) having 1 to 24 carbon atoms (preferably 1 to 8, and more preferably 1 to 4); an alkenyl group; a cycloalkyl group which may contain a substituent such as cyclopentyl, cyclohexyl, cycloheptyl, cycloheptyl, cyclooctyl and mentyl; a dicycloalkyl group or polycycloalkyl group which may be condensed such as bicyclohexyl, norbornyl and adamantyl; an aryl group containing an aromatic ring which may contain a substituent such as phenyl, tosyl, thiophenyl, pyrrolynyl, pyridinyl and furanyl; a diaryl group or polyaryl group which may be condensed such as naphthyl, anthracenyl, fluorenyl, 1,2,3,4-tetrahydronaphthyl, indanyl, quinolinyl and indenyl; an alkylaryl group; and the like.

R is independently a substituent represented by $-R^1$, $-OR^1$, $-COR^1$, $-COOR^1$, $-CO(COR^1)$, or $-CO(COOR^1)$.

$R^1$ is a hydrocarbon group which has 4 or more (for example, 4 to 8, or 4 to 12) carbon atoms and which may contain a substituent (for example, a alkyl group having 1 to 4 carbon atoms (preferably, a methyl group, a ethyl group, or a propyl group)), a silyl group, a alkylsilyl group, a group represented by $-(R^2O)_x-R^3$, or a group represented by $-(OSiR^3{}_2)_x-OR^3$ (wherein $R^2$ is a alkylene group, $R^3$ is independently a hydrocarbon group which may be the same as or different from each other, and x is an integer having 1 or more).

Examples of the hydrocarbon group for $R^1$ include a linear or branched butyl group, pentyl group, hexyl group, heptyl group, octyl group, nonyl group, decyl group, dodecyl group, pentadecyl group, eicosanyl group, and the like.

n is an integer of 2 or more (e.g., 2 to 4, or 2 to 3).
m is the valence of M.

The proton donor represented by the formula (I) is preferably dialkylbenzenesulfonic acid, dialkylnaphthalenesulfonic acid, sulfophthalate, or a proton donor represented by the following formula (II) (organic protonic acid or a salt thereof).

$$M(XCR^4(CR^5{}_2COOR^6)COOR^7)_p \qquad (II)$$

In the formula (II), M and X are the same as those in the formula (I).
p is the valence of M.

$R^4$ and $R^5$ are independently a hydrogen atom, a hydrocarbon group or a group represented by $R^8{}_3Si$- (herein, $R^3$ is a hydrocarbon group, and the three $R^8$'s may be the same as or different from each other).

Examples of the hydrocarbon group for $R^4$ and $R^5$ include a linear or branched alkyl group having 1 to 24 carbon atoms; an aryl group containing an aromatic ring; an alkylaryl group and the like.

The hydrocarbon group for $R^3$ is the same as the hydrocarbon group for $R^4$ and $R^5$.

$R^6$ and $R^7$ are independently a hydrocarbon group or a group represented by $-(R^9O)_q-R^{10}$ [herein, $R^9$ is a hydrocarbon group or a silylene group, $R^{10}$ is a hydrogen atom, a hydrocarbon group or a group represented by $R^{11}{}_3Si$- (wherein $R^{11}$ is a hydrocarbon group, and three $R^{11}$'s may be the same as or different from each other), and q is an integer of 1 or more].

Examples of the hydrocarbon group for $R^6$ and $R^7$ include a linear or branched alkyl group having 1 to 24 carbon atoms, preferably having 4 or more carbon atoms (for example, 4 to 10 or 4 to 14); an aryl group containing an aromatic ring; an alkylaryl group; and the like.

Specific examples of the hydrocarbon group for $R^6$ and $R^7$ include a linear or branched butyl group, pentyl group, hexyl group, octyl group (e.g., 2-ethylhexyl), decyl group, and the like.

Examples of the hydrocarbon group for $R^9$ include a linear or branched alkylene group having 1 to 24 carbon atoms; an arylene group containing an aromatic ring; an alkylarylene group; and an arylalkylene group.

Examples of the hydrocarbon group for $R^{10}$ and $R^{11}$ include the same as those for $R^4$ and $R^5$. q is preferably an integer of 1 to 10.

Specific examples of the acid of the proton donor represented by the formula (II) in the case where $R^6$ and $R^7$ are a group represented by $-(R^9O)_q-R^{10}$ include an acid represented by the following formula:

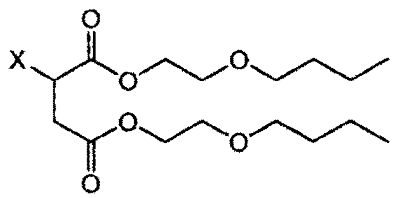

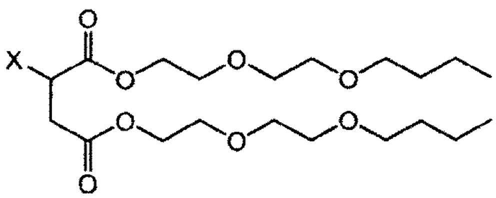

wherein in the formula, X is a group represented by-$SO_3$, and the like.

The proton donor represented by the formula (II) (organic protonic acid or a salt thereof) is preferably a sulfosuccinic acid derivative represented by the following formula (III).

$$M(O_3SCH(CH_2COOR^{12})COOR^{13})_m \qquad (III)$$

In the above formula (III), M and m are the same as those in the above formula (I).

$R^{12}$ and $R^{13}$ are independently a hydrocarbon group or a group represented by $-(R^{14}O)_r-R^{15}$ [herein, $R^{14}$ is a hydrocarbon group or a silylene group, $R^{15}$ is a hydrogen atom, a hydrocarbon group or a group represented by $R^{16}{}_3Si$- (herein, $R^{16}$ is a hydrocarbon group, and three $R^{16}$'s may be the same as or different from each other), and r is an integer of 1 or more].

The hydrocarbon group for $R^{12}$ and $R^{13}$ is the same as the hydrocarbon group for $R^6$ and $R^7$.

The hydrocarbon group for $R^{14}$ is the same as the hydrocarbon group for $R^9$. The hydrocarbon group for $R^{15}$ and $R^{16}$ is the same as the hydrocarbon group for $R^4$ and $R^5$.
r is preferably an integer of 1 to 10.

Specific examples of the sulfosuccinic acid derivative represented by the formula (III) in the case where $R^{12}$ and $R^{13}$ are a group represented by $-(R^{14}O)_r-R^{16}$ include the same as the proton donor represented by the formula (II) in the case where $R^6$ and $R^7$ are a group represented by $-(R^9O)_n-R^{10}$.

The hydrocarbon group for $R^{12}$ and $R^{13}$ is the same as the hydrocarbon group for $R^6$ and $R^7$, and it is preferably a butyl group, a hexyl group, a 2-ethylhexyl group, a decyl group, and the like.

The doping ratio of the proton donor to polyaniline is preferably 0.30 or more and 0.65 or less, more preferably 0.32 or more and 0.60 or less, still more preferably 0.33 or more and 0.57 or less, and particularly preferably 0.34 or more and 0.55 or less. When the doping ratio thereof is 0.30 or more, the solubility of the polyaniline complex in the organic solvent is sufficiently enhanced.

The doping ratio is defined as the formula (the number of moles of the proton donor doped into polyaniline)/(the number of moles of monomer unit of polyaniline). For example, a doping ratio of 0.5 for the polyaniline complex containing the unsubstituted polyaniline and the proton donor means that two monomer units of polyaniline are doped with one proton donor.

The doping ratio can be calculated if the number of moles of the proton donor and the monomer unit of the polyaniline in the polyaniline complex can be measured. For example, when the proton donor is an organic sulfonic acid, the number of moles of sulfur atom derived from the proton donor and the number of moles of nitrogen atom derived from the monomer unit of polyaniline can be determined by an organic elemental analysis method, and the doping ratio can be calculated by taking the ratio of these values.

The polyaniline complex preferably includes an unsubstituted polyaniline and a sulfonic acid which is a proton donor, and satisfies the following formula (5):

$$0.32 \leqq S_5/N_5 \leqq 0.60 \quad (5)$$

wherein in the formula, $S_5$ is the sum of the moles of sulfur atom contained in the polyaniline complex, and $N_5$ is the sum of the moles of nitrogen atom contained in the polyaniline complex; the moles of nitrogen atom and sulfur atom are measured by an organic elemental analysis method.

The component (a) may be used alone, or two or more kinds thereof may be used in combination.

The amount of the component (a) is preferably 0.1 to 20% by mass, more preferably 0.5 to 15% by mass, still more preferably 1 to 10% by mass, and particularly preferably 2 to 5% by mass, based on 100% by mass of the entire composition.

The method for producing the component (a) described above is not particularly limited, but can be produced, for example, by the method for producing the component (a) described below.

For example, the above-mentioned proton donor, the aniline corresponding to the above-mentioned polyaniline, and optionally a surfactant (e.g., a non-ionic emulsifier) are dissolved in a water-immiscible organic solvent (e.g., a hydrocarbon-based solvent (preferably toluene or xylene)), and an acidic aqueous solution (e.g., an aqueous solution of phosphoric acid) is added thereto, and a reaction solution having two liquid phases of a water-immiscible organic solvent and water is stirred, and a polymerization initiator (e.g., ammonium persulfate) is charged to carry out polymerization.

After the polymerization, the water-immiscible organic solvent phase is separated by standing to obtain a polyaniline complex water-immiscible organic solvent solution.

The solution can be transferred to an evaporator and the volatiles evaporated to obtain a polyaniline complex (protonated polyaniline).

(Component (b): phenolic compound)

When a phenolic compound is used in the composition according to an aspect of the present invention, the conductivity of the obtained conductive film can be improved.

The phenolic compound is not particularly limited, and it is a compound represented by ArOH (herein, Ar is an aryl group or a substituted aryl group). Specific examples thereof include substituted phenols such as phenol, o-, m- or p-cresol, o-, m- or p-ethyl phenol, o-, m- or p-propylphenol, o-, m- or p-butylphenol, o-, m- or p-chlorophenol, o-, m- or p-tert-amylphenol, salicylic acid, hydroxybenzoic acid, and hydroxynaphthalene; a polyvalent phenolic compound such as catechol and resorcinol; a polymer compound such as phenolic resin, polyphenol and poly(hydroxystyrene); and the like.

In addition, a phenolic compound represented by the following formula (3) can be used therein:

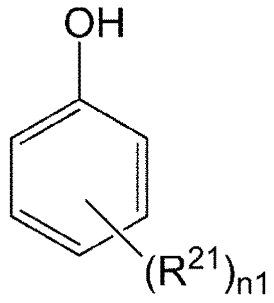

(3)

wherein in the formula (3), n1 is an integer of 1 to 5 (preferably 1 to 3);

$R^{21}$ is independently an alkyl group having 1 to 10 carbon atoms (preferably 2 to 8, more preferably 3 to 7), an alkenyl group having 2 to 20 carbon atoms, an alkylthio group having 1 to 20 carbon atoms, a cycloalkyl group having 3 to 10 carbon atoms, an aryl group having 6 to 20 carbon atoms, an alkylaryl group having 7 to 20 carbon atoms, or an arylalkyl group having 7 to 20 carbon atoms.

The above $R^{21}$ will be described below.

Examples of the alkyl group include methyl, ethyl, propyl, isopropyl, butyl, isobutyl, tert-butyl, tert-amyl, and the like.

Examples of the alkenyl group include a substituent having an unsaturated bond in the molecular of alkyl group described above.

Examples of the cycloalkyl group include cyclopentane, cyclohexane, and the like.

Examples of the alkylthio groups include methylthio, ethylthio, and the like.

Examples of the aryl group include phenyl, naphthyl, and the like.

Examples of the alkylaryl group, and arylalkyl group include a substituent obtained by using the alkyl group and the aryl group described above in combination.

Among these groups, $R^{21}$ is preferably a methyl or ethyl group.

In addition, a phenolic compound represented by the following formula (3') can be used:

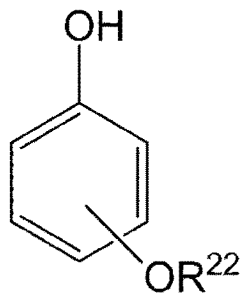

(3')

wherein in the formula (3'), $R^{22}$ is an alkyl group having 1 to 20 carbon atoms, an alkenyl group having 2 to 20 carbon atoms, a cycloalkyl group having 3 to 10 carbon atoms, an alkylthio having 1 to 20 carbon atoms, an aryl group having 6 to 20 carbon atoms, an alkylaryl having 7 to 20 carbon atoms, or an arylalkyl having 7 to 20 carbon atoms.

Specific examples of $R^{22}$ in the formula (3') are the same as those for $R^{21}$ in the formula (3).

The component (b) may be used alone, or two or more kinds thereof may be used in combination.

The amount of the component (b) is preferably 1 to 50% by mass, more preferably 5 to 45% by mass, still more preferably 10 to 40% by mass, and particularly preferably 20 to 40% by mass, based on 100% by mass of the entire composition.

The mass ratio of the amount of the component (a) to the amount of the component (b) ("the amount of the component (a)": "the amount of the component (b)") may be 1:1 to 1:20, preferably 1:3 to 1:15, and more preferably 1:5 to 1:10, from the viewpoint of conductivity.

(Component (c): thickener)

The component (c) is preferably a polyether-based compound or a cellulosic compound.

Examples of the polyether-based compound include a polyethylene oxide (EO)-polypropylene oxide (PO) copolymer (for example, EP1550H (manufactured by Meisei Chemical Works, Ltd.)).

Examples of the cellulosic compound include, for example, cellulose ethers (e.g., ethyl cellulose, methyl

cellulose), hydroxyethyl cellulose, or hydroxypropyl methylcellulose. Among these, the cellulose ether can be suitably used from the viewpoint of high thickening effect and easy availability. Among the cellulose ethers, ethyl cellulose can be suitably used.

Examples of the cellulosic compound include EC-N300 (manufactured by Ashland), and N200 (manufactured by Ashland), and Klucel G (manufactured by Ashland).

The component (c) may be used alone, or two or more kinds thereof may be used in combination.

The amount of the component (c) is, for example, 0.1% by mass or more, 0.2% by mass or more, 0.3% by mass or more, 0.5% by mass or more, 1.5% by mass or more, 2% by mass or more, 0.2 to 10% by mass, 0.3 to 10% by mass, 0.5 to 10% by mass, 1.5 to 5% by mass, or 2 to 3% by mass based on 100% by mass of the entire composition.

The mass ratio of the amount of the component (a) to the amount of the component (c) ("the amount of the component (a)": "the amount of the component (c)") is, for example, 1:0.01 to 1:3, 1:0.035 to 1:2, 1:0.1 to 1:1.5, 1:0.1 to 1:1, 1:0.1 to 1:0.9, 1:0.1 to 1:0.7, 1:0.2 to 1:0.7, or 1:0.3 to 1:0.7, from the viewpoint of conductivity.

(Component (d): solvent)

The composition according to an aspect of the present invention include a solvent. The solvent is not particularly limited as long as it dissolves the component (a), but is preferably an organic solvent. The organic solvent may be a water-soluble organic solvent or may be an organic solvent that is substantially immiscible with water (a water-immiscible organic solvent).

The water-soluble organic solvent may be a protic polar solvent or an aprotic polar solvent, and examples thereof include alcohols such as isopropyl alcohol, 1-propanol, 1-butanol, 2-butanol, 2-pentanol, benzyl alcohol, alkoxy alcohols (for example, 1-methoxy-2-propanol, 3-methoxy-1-butanol, 3-methoxy-3-methylbutanol) and ethylene glycol; ketones such as acetone; ethers such as tetrahydrofuran, dioxane and ethylene glycol mono-tert-butyl ether; an aprotic polar solvent such as N-methylpyrrolidone; and the like.

Examples of the water-immiscible organic solvent include, for wxample, a hydrocarbon-based solvent such as hexane, benzene, toluene, xylene, ethyl benzene, tetralin and IP Solvent 1620; a halogen-based solvent such as methylene chloride, chloroform, carbon tetrachloride, dichloroethane and tetrachloroethane; an ester-based solvent such as ethyl acetate, isobutyl acetate, n-butyl acetate, butyl butyrate and ethyl lactate; ketone solvents such as methyl isobutyl ketone (MIBK), diisobutyl ketone (DIBK), methyl ethyl ketone, cyclopentanone and cyclohexanone; ether solvents such as cyclopentylmethyl ether, 4-methyltetrahydropyran, 1,2-diethoxyethane and dipropylene glycol dimethyl ether; and the like. In addition, an isoparaffin-based solvent containing one kind or two or more kinds of isoparaffins may be used as the hydrocarbon-based solvent.

Of these, toluene, xylene, methyl isobutyl ketone, chloroform, trichloroethane, and ethyl acetate are preferable from the viewpoint of excellent solubility of the component (a).

In the component (a), the polyaniline complex can be dissolved even when the solvent is an alcohol such as isopropyl alcohol, 1-butanol, 2-butanol, 2-pentanol, benzyl alcohol and alkoxy alcohol. The alcohol is preferable from the viewpoint of reducing environmental impact as compared with an aromatic compound such as toluene.

When an organic solvent is used as the solvent, it is preferable to use a mixed organic solvent in which a water-immiscible organic solvent and a water-soluble organic solvent are mixed at 99 to 1:1 to 99 (mass ratio) in order to prevent generation of a gel or the like during storage and to allow long-term storage.

As the water-immiscible organic solvent of the mixed organic solvent, a low-polarity organic solvent can be used, and as the low-polarity organic solvent, a hydrocarbon-based solvent such as hexane or toluene; a halogen-based solvent such as chloroform; and an isoparaffin-based solvent are preferable.

As the water-soluble organic solvent of the mixed organic solvent, a highly polar organic solvent can be used, and for example, alcohols such as methanol, ethanol, isopropyl alcohol, 2-methoxyethanol, 2-ethoxyethanol, 1-methoxy-2-propanol and 3-methoxy-1-butanol; ketones such as acetone, methyl ethyl ketone and methyl isobutyl ketone; and ethers such as tetrahydrofuran, diethyl ether and ethylene glycol mono-tert-butyl ether are preferable.

The mixed organic solvent may include one kind or two or more kinds of water-immiscible organic solvents, and it may include one kind or two or more kinds of water-soluble organic solvents.

The component (d) may be used alone, or two or more kinds thereof may be used in combination.

The amount of the component (d) may be 50 to 99% by mass, 55 to 99% by mass, or 70 to 99% by mass, based on 100% by mass of the entire composition.

When the component (d) includes 3-methoxy-3-methylbutanol, ethylene glycol and IP solvent 1620, it is preferable that the component (b) be p-tert-amylphenol and the component (c) be EC-N300, and in addition, further "the amount of the component (a)": "the amount of the component (b)" is preferably 1:3 to 1:10, and particularly preferably 1:5 to 1:8. In addition, the "the amount of the component (a)": "the amount of the component (c)" is preferably 1:0.02 to 1:2, and particularly preferably 1:0.1 to 1:0.3.

When the component (d) includes toluene and isopropyl alcohol, it is preferable that the component (b) be m-cresol and the component (c) be EC-N300, and in addition, further "the amount of the component (a)": "the amount of the component (b)" is preferably 1:3 to 1:10, and particularly preferably 1:7 to 1:9. In addition, "the amount of the component (a)": "the amount of the component (c)" is preferably 1:0.02 to 1:5, and particularly preferably 1:0.1 to 1:2.

(Component (e): acidic substance and/or salt of acidic substance)

The composition according to an aspect of the present invention may further include one or more acid species selected from the group consisting of an acidic substance and a salt of an acidic substance (hereinafter, also referred to as "component (e)"). The component is usually used as a heat-resistant stabilizer, and the heat resistance of the conductive film can be further improved.

The acidic substance may be either an organic acid which is an acid of an organic compound or an inorganic acid which is an acid of an inorganic compound, and is preferably an organic acid. The acidic substance is preferably an organic acid containing one or more sulfonic acid groups.

The organic acid having a sulfonic acid group is preferably a cyclic, linear or branched alkylsulfonic acid having one or more sulfonic acid groups, a substituted or unsubstituted aromatic sulfonic acid, or a polysulfonic acid.

Examples of the alkylsulfonic acid include methanesulfonic acid and ethanesulfonic acid. Herein, alkyl group is preferably a linear or branched alkyl group having 1 to 18 carbon atoms.

Examples of the aromatic sulfonic acid include those having 6 to 20 carbon atoms, and examples thereof include a sulfonic acid containing a benzene ring, a sulfonic acid containing a naphthalene skeleton, and a sulfonic acid containing an anthracene skeleton. Examples of the aromatic sulfonic acid include a substituted or unsubstituted benzenesulfonic acid, a substituted or unsubstituted naphthalenesulfonic acid, and a substituted or unsubstituted anthracenesulfonic acid.

The substituent is, for example, a substituent selected from the group consisting of an alkyl group (for example, 1 to 20 carbon atoms), an alkoxy group (for example, 1 to 20 carbon atoms), a hydroxyl group, a nitro group, a carboxy group and an acyl group, and one or more thereof may substitute.

Specific examples of the aromatic sulfonic acid include a compound represented by the following formula (4) or (5):

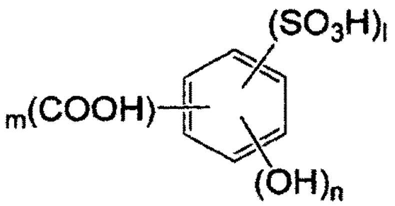

(4)

wherein in the formula (4), l is 1 or more, m is an integer of 0 or more and 5 or less, and n is an integer of 0 or more and 5 or less; when one of m or n is 0, the other is 1 or more:

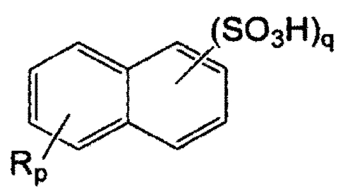

(5)

wherein in the formula (5), q is 1 or more, p is an integer of 0 or more and 7 or less, and R is independently an alkyl group having 1 to 20 carbon atoms, a carboxy group, a hydroxyl group, a nitro group, a cyano group, or an amino group.

In the formula (4), l is preferably 1 to 3. In the formula (4), m is preferably 1 to 3. In the formula (4), n is preferably 0 to 3.

In the formula (5), q is preferably 1 to 3. In the formula (5), p is preferably 0 to 3. In the formula (5), R is preferably an alkyl group having 1 to 20 carbon atoms, a carboxy group, or a hydroxyl group.

Examples of the aromatic sulfonic acid include 4-sulfophthalic acid, 5-sulfoisophthalic acid, 5-sulfosalicylic acid, 1-naphthalenesulfonic acid, 2-naphthalenesulfonic acid, 2-hydroxy-6-naphthalenesulfonic acid, p-phenolsulfonic acid, toluenesulfonic acid, p-xylene-2-sulfonic acid, 4,4'-biphenyldisulfonic acid, dibenzofuran-2-sulfonic acid, flavianic acid, (+)-10-camphorsulfonic acid, monoisopropylnaphthalenesulfonic acid, 1-pyrenesulfonic acid, and the like. Among these, from the viewpoint of improving heat resistance, 4-sulfophthalic acid, 5-sulfosalicylic acid, 5-sulfoisophthalic acid, 2-naphthalenesulfonic acid, dibenzofuran-2-sulfonic acid, flavianic acid, 2-hydroxy-6-naphthalenesulfonic acid and 1-pyrenesulfonic acid are preferable.

Examples of the salt of acidic substance include the salt of the compound listed above. Examples of the counterion of the salt include sodium, lithium, potassium, cesium, ammonium, calcium, and barium.

The component (e) may be a hydrate.

The component (e) may be used alone, or two or more kinds thereof may be used in combination.

When the component (e) is included therein, the amount of the component (e) is preferably 0.01 to 10% by mass, more preferably 0.02 to 5% by mass, and still more preferably 0.05 to 3% by mass, based on 100% by mass of the entire composition.

When the component (e) is included therein, the mass ratio of the amount of the component (a) to the amount of the component (e) ("the amount of the component (a)": "the amount of the component (e)") may be 1:0.01 to 1:1, preferably 1:0.05 to 1:0.5, and more preferably 1:0.07 to 1:0.1, from the viewpoint of heat resistance.

The composition according to an aspect of the present invention may consist essentially of one or more components selected from the group consisting of components (a), (b), (c) and (d), and optionally (e). In such cases, other unavoidable impurities may be included as long as the effect of the present invention is not impaired.

For example, 70% or more, 80% or more by mass, 90% or more, 98% or more by mass, 99% or more, 99.5% or more by mass, 99.9% or more, or 100% by mass of the composition according to an aspect of the present invention consists of

components (a) to (d), or
components (a) to (e).

[Conductive Film]

A conductive film according to an aspect of the present invention is formed using the above-described composition.

For example, a conductive film can be formed by applying the composition according to an aspect of the present invention on a substrate and by drying. The conductive plating laminate may be formed by coating the composition on a substrate such as a glass, a resin film, a sheet and a nonwoven fabric having a desired shape.

The thickness of the conductive film is usually 1 mm or less, and preferably 10 nm to 50 μm.

The conductivity of the conductive film according to an aspect of the present invention may be, for example, 0.5 S/cm or more from the viewpoint of exhibiting the effect of a conductive material, examples thereof include 1 S/cm or more, 4 S/cm or more, 5 S/cm or more, 9 S/cm or more, 10 S/cm or more, 20 S/cm or more, 100 S/cm or more, or 200 S/cm or more, and examples thereof include 400 S/cm or less, or 300 S/cm or less.

The resistivity of the conductive film is measured by using a resistivity meter "Loresta GP" (manufactured by Mitsubishi Chemical Corporation) in the four-terminal method, and the conductivity of the conductive film is calculated from the following formula.

Conductivity [S/cm] = inter-electrode distance (=1 cm)/(resistivity [$\Omega$] $\times$ film thickness [cm] $\times$ film width [cm])

As a method of applying the composition, a known method such as a casting method, a spraying method, a dip coating method, a doctor blade method, a bar code method, a spin coating method, an electrospinning method, a screen printing method and a gravure printing method can be used.

Further, it may be formed by being provided with immersing the conductive film (coating film) in a solution containing the component (e) and drying the conductive film. The component (e) in the case is preferably the compound represented by the above formula (4) or a salt thereof.

The immersing solution may include a solvent.

The solvent is not particularly limited as long as the component (e) is dissolved, and examples thereof include water, an alcohol-based solvent, a ketone-based solvent, an ether-based solvent, an ester-based solvent, and the like. One kind or two or more kinds thereof may be mixed and used.

Specific examples of the solvent include methanol, ethanol, isopropanol, n-butanol, 1-methoxy-2-propanol, 3-methoxy-1-butanol, 3-methoxy-3-methylbutanol, 1-ethoxy-2-propanol, ethyl acetate, butyl acetate, MIBK, methyl ethyl ketone (MEK), ethylene glycol mono-tert-butyl ether, propylene glycol monomethyl ether acetate, and dipropylene glycol monomethyl ether.

The amount of the component (e) in the solution to be immersed is preferably 10 to 1,200 parts by mass, more preferably 30 to 700 parts by mass, and still more preferably 70 to 400 parts by mass, based on 1 part by mass of the composition obtained by removing the solvent.

When the amount thereof is more than 1,200 parts by mass, the acidic substance becomes excessive in the coating film to cause deterioration of the polyaniline main chain, and the conductivity may be lowered.

The component (e) is preferably 0.1% by weight to 10% by weight, more preferably 0.3% by weight to 6% by weight, and still more preferably 0.7% by weight to 3.5% by weight in the immersion solution.

Examples of the dipping method include dipping.

The immersion time is preferably 1 minute or more, and more preferably 3 minutes or more and 200 minutes or less. The immersion temperature is preferably 5°C to 50°C.

Drying after immersion is preferably conducted using an oven, a hot plate, or the like.

The drying temperature is preferably 80 to 200°C, and more preferably 100 to 170°C.

The drying time is preferably 1 to 180 minutes, and more preferably 3 to 60 minutes. If necessary, heating may be performed under reduced pressure. The drying temperature and the drying time are not particularly limited, and may be appropriately selected according to material used.

As described above, the component (e) may be added to the composition or may be infiltrated in the conductive film obtained from the composition. The component (e) may be added to the composition, and the component (e) may be further infiltrated in the conductive film obtained from the composition.

That is, the conductive film according to an aspect of the present invention may include a component (e) (hereinafter, sometimes referred to as a component (e1)) added prior to film formation and a component (e) (hereinafter, sometimes referred to as a component (e2)) added after film formation. The components (e1) and (e2) may be the same as or different from each other. When they are different from each other, for example, the component (e1) is the compound represented by the formula (5), and the component (e2) is the compound represented by the formula (4).

[Capacitor]

The capacitor according to an aspect of the present invention includes the above-described conductive film.

For example, a capacitor can be produced by using the composition according to an aspect of the present invention. Specific examples of the capacitor include an electrolytic capacitor and an electric double layer capacitor, and examples of the electrolytic capacitor include a solid electrolytic capacitor.

When a solid electrolytic capacitor is manufactured, for example, the method includes a step of forming a conductive film on the anode body by applying the composition of the present invention to anode body including the anode and a dielectric material of the solid electrolytic capacitor, and by drying.

The capacitor according to an aspect of the present invention has excellent heat resistance and moisture resistance, and is therefore extremely useful, for example, in the case of use in automotive applications or in circuit substrate or the like in communication base stations. The vehicle such as automobile may be placed in harsh environments with high temperatures and humidity. In addition, since the circuit substrate of the communication base station may be heated to a high temperature by an electronic apparatus such as a power amplifier, the capacitors used for these are required to have a predetermined heat resistance and moisture resistance, and the above-described capacitors can satisfy the requirements.

[Battery]

The battery according to an aspect of the present invention includes the above-described conductive film.

The conductive film according to an aspect of the present invention can be used as a battery material.

[Conductive plating laminate and conductive article]

A conductive plating laminate having a conductive film can be produced by applying a composition according to an aspect of the present invention to a substrate such as a glass, a resin film, a sheet and a nonwoven fabric having a desired shape and removing a solvent. The conductive plating laminate can be processed into desired shape by known method such as vacuum-forming and pressure-forming to produce a conductive article. From the viewpoint of molding, the substrate is preferably a resin film, a sheet, or a nonwoven fabric.

As a method of applying the composition to the substrate, known method such as a casting method, a spraying method, a dip coating method, a doctor blade method, a bar coating process, a spin coating method, an electrospinning method, a screen printing method and a gravure printing method can be used. When the coating film is dried, the coating film may be heated depending on the type of the solvent. For example, heating is performed at a temperature of 250°C or less under an airflow, preferably 50 or more, and 200°C or less, and further heating is performed under reduced pressure as necessary. The heating temperature and the heating time are not particularly limited, and may be appropriately selected according to material used.

By using the composition according to an aspect of the present invention, it may form a self-supporting molded article having no substrate.

Examples

Production Example 1 (production of polyaniline complex)

32.4 g of "NEOCOL SWC" (sodium di-2-ethylhexyl sulfosuccinate, manufactured by Daiichi Kogyo Seiyaku Co., Ltd.), 13.3 g of aniline, and 0.9 g of "SORBON T-20" (non-ionic emulsifier having polyoxyethylene sorbitan fatty acid ester structure, manufactured by TOHO Chemical Industry Co., Ltd.) were added to 1,000 mL of separable flask, and they were dissolved in 320.4 g of toluene. 450 g of 8.5% by mass aqueous solution of phosphoric acid was added thereto, the reaction solution having two liquid phases of toluene phase and aqueous phase was stirred, and the internal temperature of the reaction solution was cooled to -3°C. When the internal temperature of the reaction solution reached -3°C, a solution obtained by dissolving 39.3 g of APS (ammonium persulfate) in a 90.2 g of 8.5 % by mass aqueous solution of phosphoric acid was charged while the reaction solution was stirred. After charging, the input was further stirred for 24 hours while keeping the internal temperature of the solution at -3°C. After the stirring was stopped, the contents were transferred to a separatory funnel, and the aqueous phase and the toluene phase were separated stationary. After separating, the toluene phase was washed once with a 180.3 g of 8.5% by mass aqueous solution of phosphoric acid and three times with a 328.0 g of ion-exchanged water to obtain a polyaniline complex toluene solution.

The solution was transferred to an evaporator, heated in a hot water bath at 60°C, and evaporated under reduced pressure to obtain polyaniline complex 1 (protonated polyaniline). The weight average molecular weight of polyaniline of polyaniline complex 1 was 112,000.

The weight average molecular weight of the polyaniline was determined as follows.

1.65 to 1.85 g of lithium bromide was dissolved in 2,000 mL of NMP (N-methyl-2-pyrrolidone), and 0.01 M (mol/L) of NMP solution of lithium bromide was prepared. 14 μL of triethylamine was added to 10 mL of 0.01 M (mol/L) of NMP solution of lithium bromide, and it was stirred and dissolved to obtain a homogeneous solution. Further, 50 μL of polyaniline complex toluene solution obtained in Production Example 1 was added dropwise, and after stirring and mixing, the solution was passed through a 0.45 μm filter to prepare a sample for measuring gel permeation chromatography (GPC).

By using a sample for GPC measurement, the GPC measurement was conducted by using GPC columns ("ShodexKF-806M" manufactured by Showa Denko Co., Ltd., two columns were connected) under the following conditions.

Solvent: 0.01 M (mol/L) LiBr-containing NMP
Flow rate: 0.70 mL/min
Column temperature :60°C
Inject volume: 100 μL
UV detection wavelength :270 nm

The weight-average molecular weight obtained by the above-described method is obtained as a conversion value of polystyrene (PS).

The doping ratio of the proton donor (sodium di-2-ethylhexyl sulfosuccinate) to polyaniline was 0.36.

Example 1 (preparation of composition)

30 g of 3-methoxy-3-methylbutanol (MMB), 10 g of ethylene glycol (EG), 20 g of IP solvent 1620 (IP1620, manufactured by Idemitsu Kosan Co., Ltd.), and 40 g of p-tert-amylphenol (tAP) (component (b)) were stirred and mixed until uniform to prepare mixed solvent A. 5 g of polyaniline complex 1 and 0.1 g of EC-N300 (N300, ethyl cellulose, a compound represented by the following structure, manufactured by Ashland) were dissolved in 94.9 g of the mixed solvent A to obtain polyaniline complex solution 1.

1 g of 2-naphthalenesulfonic acid (NSA) hydrate (the hydrate is used with a trace amount, and therefore, it is used as 1 g of NSA) was dissolved in 9 g of 3-methoxy-3-methylbutanol (MMB) to obtain homogeneous 2-naphthalenesulfonic acid solution 1.

0.188 g of 2-naphthalenesulfonic acid solution 1 was added to 5 g of polyaniline complex solution 1, and they were stirred in a water bath at 30°C for 30 minutes to obtain a composition.

In Table 1, the amount of the component (d) is used as the total amount of each component (d) (the same applies hereinafter).

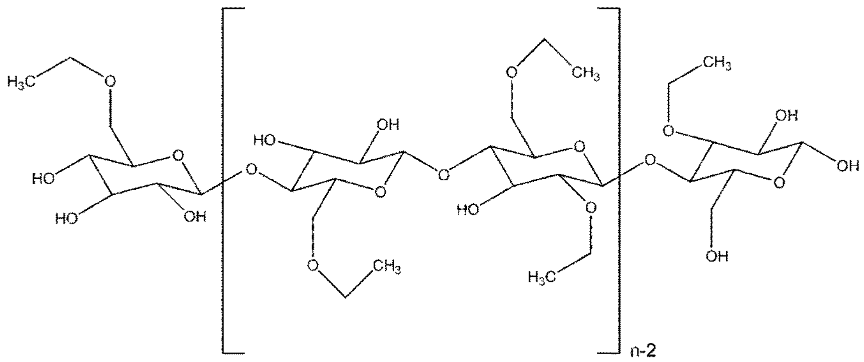

N300

(Measurement of viscosity)

The obtained composition was subjected to viscosity measurement using a sine-wave vibro viscometer SV-1H (manufactured by A&D Company, Limited) at a liquid temperature of 23 to 24°C.
The results are shown in Table 1.

(Production of conductive film)

1 mL of the above-described composition was applied to the upper surface of a glass substrate 1 having the indium-tin-oxide (ITO) electrode 2 formed thereon by patterning as illustrated in Fig. 1. The applying was performed by a spin coating method under an atmosphere. After dropping the composition, the rotation time of the glass substrate 1 was for 15 seconds and the rotation speed of the glass substrate 1 was 2,000 to 2,500 rpm. Thereafter, the glass substrate 1 was dried to form a conductive film. It was dried at 80°C for 5 minutes.

(Evaluation of conductive film (conductivity))

As shown in Fig. 2, a part of the obtained conductive film 5 covering the terminals of ITO electrodes was scraped in an atmosphere, and the terminals of ITO electrodes 2 were exposed. The resistance was measured using the surface-exposed ITO electrodes 2 by using a resistivity meter "Loresta GP" (manufactured by Mitsubishi Chemical Corporation) in the four-terminal method.
In addition, the film thickness and the film width of the conductive film were measured using a scanning white light interferometry VS1330 (manufactured by Hitachi High-Tech Corporation). The conductivity of the conductive film was calculated by the following formula.

Conductivity [S/cm] = inter-electrode distance (=1 cm)/(resistivity [$\Omega$] $\times$ film thickness [cm] $\times$ film width [cm])

The results are shown in Table 1.

Example 2

5 g of polyaniline complex 1 and 0.5 g of N300 were dissolved in 94.5 g of the mixed solvent A prepared in Example 1 to obtain polyaniline complex solution 2.
0.188 g of 2-naphthalenesulfonic acid solution 1 prepared in Example 1 was added to 5 g of polyaniline complex solution 2, and they were stirred in a water bath at 30°C for 30 minutes to obtain a composition.
The obtained composition was evaluated in the same manner as in Example 1. The results are shown in Table 1.

Example 3

37.5 g of MMB, 12.5 g of EG, 25 g of tAP, and 25 g of IP1620 were stirred and mixed until uniform to prepare mixed solvent B. 5 g of polyaniline complex 1 and 0.5 g of N300 were dissolved in 94.5 g of this mixed solvent B to obtain polyaniline complex solution 3.
0.188 g of 2-naphthalenesulfonic acid solution 1 prepared in Example 1 was added to 5 g of polyaniline complex solution 3, and they were stirred in a water bath at 30°C for 30 minutes to obtain a composition.

The obtained composition was evaluated in the same manner as in Example 1. The results are shown in Table 1.

Comparative Example 1

50 g of MMB, 17 g of EG, and 33 g of IP1620 were stirred and mixed to prepare mixed solvent C. The mixed solvent C did not uniformly dissolve. 5 g of polyaniline complex 1 and 0.5 g of N300 were added to 94.5 g of this mixed solvent C to obtain polyaniline complex solution 4. In the polyaniline complex solution 4, the polyaniline complex 1 was not dissolved therein to result in a heterogeneous solution.
0.188 g of 2-naphthalenesulfonic acid solution 1 prepared in Example 1 was added to 5 g of polyaniline complex solution 4, and they were stirred in a water bath at 30°C for 30 minutes to obtain a composition.
The polyaniline complex 1 was not dissolved in this composition to result in a uniform composition. Therefore, an accurate viscosity measurement could not be conducted. In Table 1, it is shown as "-" (hereinafter, the same applies).
In addition, although a coating film was formed by the spin coating method in the same manner as in Example 1, a uniform coating film could not be produced. The resistance value thereof was equal to or higher than the measurement upper limit, and a conductive coating film could not be produced. In Table 1, it is shown as "-" (hereinafter, the same applies).

Comparative Example 2

5 g of polyaniline complex 1 was dissolved in 95 g of the mixed solvent A prepared in Example 1 to obtain polyaniline complex solution 5.
0.188 g of 2-naphthalenesulfonic acid solution 1 prepared in Example 1 was added to 5 g of polyaniline complex solution 5, and they were stirred in a water bath at 30°C for 30 minutes to obtain a composition.
The obtained composition was evaluated in the same manner as in Example 1. The results are shown in Table 1.

Comparative Example 3

5 g of polyaniline complex 1 was added to 95 g of the mixed solvent C prepared in Comparative Example 1, to obtain polyaniline complex solution 6. The polyaniline complex 1 was not dissolved in the mixed solvent C to result in a ununiform solution.
0.188 g of 2-naphthalenesulfonic acid solution 1 prepared in Example 1 was added to 5 g of polyaniline complex solution 6, and they were stirred in a water bath at 30°C for 30 minutes to obtain a composition.
The polyaniline complex 1 was not dissolved in this composition to result in a ununiform composition. Therefore, an accurate viscosity measurement could not be conducted.
In addition, although a coating film was formed by the spin coating method in the same manner as in Example 1, a uniform coating film could not be produced. The resistance value thereof was equal to or higher than the measurement upper limit, and a conductive coating film could not be produced.

Comparative Example 4

5 g of polyaniline complex 1 was dissolved in 95 g of the mixed solvent B prepared in Example 3 to obtain polyaniline complex solution 7.
0.188 g of 2-naphthalenesulfonic acid solution 1 prepared in Example 1 was added to 5 g of polyaniline complex solution 7, and they were was stirred in a water bath at 30°C for 30 minutes to obtain a composition.
The obtained composition was evaluated in the same manner as in Example 1. The results are shown in Table 1.

Examples 11 to 13, Examples 21 to 22, Examples 31 to 32, Comparative Example 11, Comparative Example 21 and Comparative Example 31

In Examples 11, 21 and 31, compositions were prepared and evaluated in the same manner as Example 1, except that the components (c) shown in Tables 2 to 4 were used. The results are shown in Table 2 to 4.
In Examples 12, 22 and 32, compositions were prepared and evaluated in the same manner as Example 2, except that the components (c) shown in Tables 2 to 4 were used. The results are shown in Table 2 to 4.
In Comparative Examples 11, 21, and 31, compositions were prepared and evaluated in the same manner as Comparative Example 1, except that the components (c) shown in Tables 2 to 4 were used. The results are shown in Table 2 to 4.

Example 13

5 g of polyaniline complex 1 and 1.0 g of N200 were dissolved in 94 g of the mixed solvent A prepared in Example 1 to obtain polyaniline complex solution 8.

0.188 g of 2-naphthalenesulfonic acid solution 1 prepared in Example 1 was added to 5 g of polyaniline complex solution 8, and they were stirred in a water bath at 30°C for 30 minutes to obtain a composition.

The obtained composition was evaluated in the same manner as in Example 1. The results are shown in Table 2.

(Evaluation of viscosity ratio 1)

In Examples 1 to 3, Examples 11 to 13, Examples 21 to 22, Examples 31 to 32, Comparative Examples 1 to 4, Comparative Example 11, Comparative Example 21 and Comparative Example 31, the values in which each viscosity value thereof is divided by the viscosity value of Comparative Example 2 are shown in Tables 1 to 4. "-" indicates that it could not be evaluated.

Components (c) other than that used in Example 1 are shown below.

N200: ethyl cellulose, a compound represented by the following structure, manufactured by Ashland

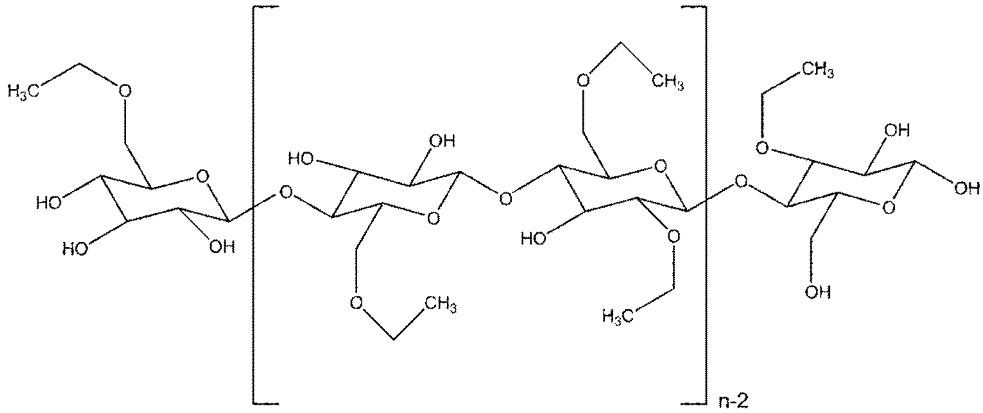

G: Klucel G, hydroxypropyl cellulose, a compound represented by the following structure, manufactured by Ashland

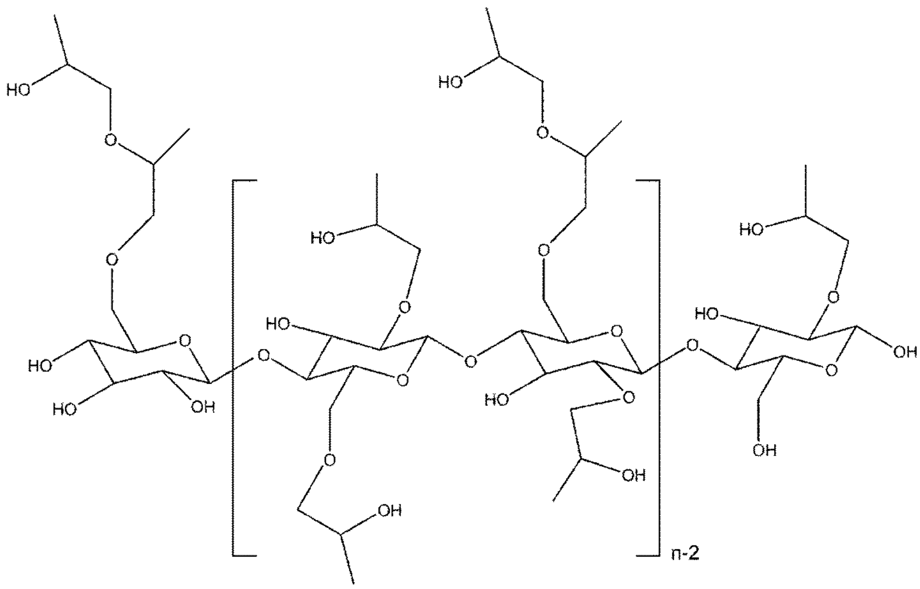

EP1550H: ethylene oxide and propylene oxide copolymer, manufactured by Meisei Chemical Works, Ltd.

Table 1

| | | Example 1 | Example 2 | Example 3 | Comparative Example 1 | Comparative Example 2 | Comparative Example 3 | Comparative Example 4 |
|---|---|---|---|---|---|---|---|---|
| Component (a) (% by mass) | Polyaniline complex 1 | 4.8 | 4.8 | 4.8 | 4.8 | 4.8 | 4.8 | 4.8 |
| Component (b) (% by mass) | tAP | 36.6 | 36.4 | 22.8 | - | 36.6 | - | 22.9 |
| Component (c) (% by mass) | N300 | 0.1 | 0.5 | 0.5 | 0.5 | - | - | - |
| | N200 | - | - | - | - | - | - | - |
| | G | - | - | - | - | - | - | - |
| | EP1550H | - | - | - | - | - | - | - |
| Component (e) (% by mass) | NSA | 0.4 | 0.4 | 0.4 | 0.4 | 0.4 | 0.4 | 0.4 |
| Component (d) (% by mass) | MMB<br>EG<br>IP1620 | 58.1 | 57.9 | 71.5 | 94.3 | 58.2 | 94.8 | 71.9 |
| Amount of component (b) (% by mass)/ amount of component (a) (% by mass) | | 7.6 | 7.6 | 4.7 | - | 7.6 | - | 4.8 |
| Amount of component (c) (% by mass)/ amount of component (a) (% by mass) | | 0.02 | 0.1 | 0.1 | 0.1 | - | - | - |
| Viscosity (mPa•s) | | 27.7 | 61.2 | 50.1 | - | 16.6 | - | 18.1 |
| Conductivity (S/cm) | | 34 | 16 | 15 | - | 33 | - | 18 |
| Viscosity ratio | | 1.67 | 3.69 | 3.02 | - | 1.00 | - | 1.09 |

Table 2

| | | Example 11 | Example 12 | Example 13 | Comparative Example 11 |
|---|---|---|---|---|---|
| Component (a) (% by mass) | Polyaniline complex 1 | 4.8 | 4.8 | 4.8 | 4.8 |
| Component (b) (% by mass) | tAP | 36.6 | 36.4 | 36.2 | - |
| Component (c) (% by mass) | N300 | - | - | - | - |
| | N200 | 0.1 | 0.5 | 1.0 | 0.5 |
| | G | - | - | - | - |
| | EP1550H | - | - | - | - |
| Component (e) (% by mass) | NSA | 0.4 | 0.4 | 0.4 | 0.4 |
| Component (d) (% by mass) | MMB | 58.1 | 57.9 | 57.6 | 94.3 |
| | EG | | | | |
| | IP1620 | | | | |
| Amount of component (b) (% by mass)/ amount of component (a) (% by mass) | | 7.6 | 7.6 | 7.5 | - |
| Amount of component (c) (% by mass)/ amount of component (a) (% by mass) | | 0.02 | 0.1 | 0.2 | 0.1 |
| Viscosity (mPa·s) | | 28.5 | 49.9 | 104 | - |
| Conductivity (S/cm) | | 38 | 21 | 4.8 | - |
| Viscosity ratio | | 1.72 | 3.01 | 6.27 | - |

Table 3

| | | Example 21 | Example 22 | Comparative Example 21 |
|---|---|---|---|---|
| Component (a) (% by mass) | Polyaniline complex 1 | 4.8 | 4.8 | 4.8 |
| Component (b) (% by mass) | tAP | 36.6 | 36.4 | - |
| Component (c) (% by mass) | N300 | - | - | - |
| | N200 | - | - | - |
| | G | 0.1 | 0.5 | 0.5 |
| | EP1550H | - | - | - |
| Component (e) (% by mass) | NSA | 0.4 | 0.4 | 0.4 |
| Component (d) (% by mass) | MMB | 58.1 | 57.9 | 94.3 |
| | EG | | | |
| | IP1620 | | | |
| Amount of component (b) (% by mass)/ amount of component (a) (% by mass) | | 7.6 | 7.6 | - |

(continued)

| | Example 21 | Example 22 | Comparative Example 21 |
|---|---|---|---|
| Amount of component (c) (% by mass)/ amount of component (a) (% by mass) | 0.02 | 0.1 | 0.1 |
| Viscosity (mPa·s) | 35.5 | 78.4 | - |
| Conductivity (S/cm) | 37 | 9.3 | - |
| Viscosity ratio | 2.14 | 4.72 | - |

Table 4

| | | Example 31 | Example 33 | Comparative Example 31 |
|---|---|---|---|---|
| Component (a) (% by mass) | Polyaniline complex 1 | 4.8 | 4.8 | 4.8 |
| Component (b) (% by mass) | tAP | 36.6 | 36.4 | - |
| Component (c) (% by mass) | N300 | - | - | - |
| | N200 | - | - | - |
| | G | - | - | - |
| | EP1550H | 0.1 | 0.5 | 0.5 |
| Component (e) (% by mass) | NSA | 0.4 | 0.4 | 0.4 |
| Component (d) (% by mass) | MMB | 58.1 | 57.9 | 94.3 |
| | EG | | | |
| | IP1620 | | | |
| Amount of component (b) (% by mass)/ amount of component (a) (% by mass) | | 7.6 | 7.6 | - |
| Amount of component (c) (% by mass)/ amount of component (a) (% by mass) | | 0.02 | 0.1 | 0.1 |
| Viscosity (mPa•s) | | 48.5 | 77.9 | - |
| Conductivity (S/cm) | | 30 | 23 | - |
| Viscosity ratio | | 2.92 | 4.69 | - |

Example 41

7 g of polyaniline complex 1 and 1 g of N300 were dissolved in 92 g of the mixed solvent A prepared in Example 1 to obtain polyaniline complex solution 9.

0.263 g of 2-naphthalenesulfonic acid solution 1 prepared in example 1 was added to 5 g of polyaniline complex solution 9, and they were stirred in a water bath at 30°C for 30 minutes to obtain a composition.

The obtained composition was evaluated in the same manner as in Example 1. The results are shown in Table 5.

Example 42

7 g of polyaniline complex 1 and 2 g of N300 were dissolved in 91 g of the mixed solvent A prepared in Example 1 to obtain polyaniline complex solution 10.

0.263 g of 2-naphthalenesulfonic acid solution 1 prepared in Example 1 was added to 5 g of polyaniline complex solution 10, and they were stirred in a water bath at 30°C for 30 minutes to obtain a composition.

The obtained composition pellets were evaluated in the same manner as in Example 1. The results are shown in

Table 5.

Comparative Example 41

7 g of polyaniline complex 1 was dissolved in 93 g of the mixed solvent A prepared in Example 1 to obtain polyaniline complex solution 11.
0.263 g of 2-naphthalenesulfonic acid solution 1 prepared in Example 1 was added to 5 g of polyaniline complex solution 11, and they were stirred in a water bath at 30°C for 30 minutes to obtain a composition.
The obtained composition was evaluated in the same manner as in Example 1. The results are shown in Table 5.

(Evaluation of viscosity ratio 2)

In Examples 41 to 42 and Comparative Example 41, the values in which each viscosity value thereof is divided by the viscosity value of Comparative Example 41 are shown in Table 5.

Table 5

| | | Example 41 | Example 42 | Comparative Example 41 |
|---|---|---|---|---|
| Component (a) (% by mass) | Polyaniline complex 1 | 6.7 | 6.7 | 6.7 |
| Component (b) (% by mass) | tAP | 35.0 | 34.6 | 35.4 |
| Component (c) (% by mass) | N300 | 1.0 | 1.9 | - |
| | N200 | - | - | - |
| | G | - | - | - |
| | EP1550H | - | - | - |
| Component (e) (% by mass) | NSA | 0.5 | 0.5 | 0.5 |
| Component (d) (% by mass) | MMB | 56.8 | 56.3 | 57.4 |
| | EG | | | |
| | IP1620 | | | |
| Amount of component (b) (% by mass)/ amount of component (a) (% by mass) | | 5.2 | 5.2 | 5.3 |
| Amount of component (c) (% by mass)/ amount of component (a) (% by mass) | | 0.1 | 0.3 | - |
| Viscosity (mPa•s) | | 110 | 326 | 22.2 |
| Conductivity (S/cm) | | 10.7 | 1.8 | 33 |
| Viscosity ratio | | 5.0 | 14.7 | 1.0 |

Example 51

10 g of polyaniline complex 1 and 1 g of N300 were dissolved in 89 g of the mixed solvent A prepared in Example 1 to obtain polyaniline complex solution 12.
0.376 g of 2-naphthalenesulfonic acid solution 1 prepared in Example 1 was added to 5 g of polyaniline complex solution 12, and they were stirred in a water bath at 30°C for 30 minutes to obtain a composition.
The obtained composition was evaluated in the same manner as in Example 1. The results are shown in Table 6.

Comparative Example 51

10 g of polyaniline complex 1 was dissolved in 90 g of the mixed solvent A prepared in Example 1 to obtain polyaniline complex solution 13.

0.376 g of 2-naphthalenesulfonic acid solution 1 prepared in Example 1 was added to 5 g of polyaniline complex solution 13, and they were stirred in a water bath at 30°C for 30 minutes to obtain a composition.
The obtained composition was evaluated in the same manner as in Example 1. The results are shown in Table 6.

(Evaluation of viscosity ratio 3)

In Example 51 and Comparative Example 51, the values in which each viscosity value thereof is divided by the viscosity value of Comparative Example 51 are shown in Table 6.

Table 6

| | | Example 51 | Comparative Example 51 |
|---|---|---|---|
| Component (a) (% by mass) | Polyaniline complex 1 | 9.3 | 9.3 |
| Component (b) (% by mass) | tAP | 33.1 | 33.5 |
| Component (c) (% by mass) | N300 | 0.93 | - |
| | N200 | - | - |
| | G | - | - |
| | EP1550H | - | - |
| Component (e) (% by mass) | NSA | 0.7 | 0.7 |
| Component (d) (% by mass) | MMB | 56.0 | 56.5 |
| | EG | | |
| | IP1620 | | |
| Amount of component (b) (% by mass)/ amount of component (a) (% by mass) | | 3.6 | 3.6 |
| Amount of component (c) (% by mass)/ amount of component (a) (% by mass) | | 0.1 | - |
| Viscosity (mPa·s) | | 147 | 34.6 |
| Conductivity (S/cm) | | 15.6 | 33 |
| Viscosity ratio | | 4.2 | 1.0 |

Example 61 (preparation of composition)

95 g of toluene (Tol) and 5 g of isopropyl alcohol (IPA) were stirred and mixed until uniform to prepare mixed solvent D. 0.30 g of polyaniline complex 1 and 0.03 g of EC-N300 (N300, ethyl cellulose, a compound represented by the following structure, manufactured by Ashland) were dissolved in 7.25 g of mixed solvent D to obtain polyaniline complex 14.
2.42 g of m-cresol was added to the polyaniline complex 14, and they were stirred in a water bath at 30°C for 30 minutes to obtain 10 g of composition as the total amount.
The viscosity of the obtained composition was measured in the same manner as in Example 1. The conductivity of the obtained conductive film was determined in the same manner as in Example 1. The results are shown in Table 7.

Examples 62 to 69 and Comparative Examples 61 to 65

The compositions were prepared and evaluated in the same manner as in Example 61 except that the amounts shown in Tables 7 and 8 were used. The results are shown in Tables 7 and 8.

(Evaluation of viscosity ratio 4)

In Examples 61 to 69 and Comparative Examples 61 to 65, the values in which each viscosity value thereof is divided by the viscosity value of Comparative Example 65 are shown in Tables 7 and 8.
Fig. 3 is a diagram illustrating the synergistic effects of component (b) and component (c) using Examples 61 to 65 and Comparative Examples 61 to 64. In Examples 61 to 65, the compositions contain 24.2% by mass of the component (b).

On the other hand, in Comparative Examples 61 to 64, the compositions do not include the component (b).

The vertical axis was used as the viscosity, and the horizontal axis was used as the amount of the component (c).

Even when the amount of the component (c) is small, an increase in viscosity due to the synergistic effect of the component (b) and the component (c) is shown (it is indicated by a solid line with arrows at both ends in Fig. 3), and as the amount of the component (c) increases, a remarkable increase in viscosity due to the synergistic effect of the component (b) and the component (c) is shown (it is indicated by a dashed line with arrows at both ends in Fig. 3).

Table 7

| | | Example 61 | Example 62 | Example 63 | Example 64 | Example 65 | Example 66 | Example 67 | Example 68 | Example 69 |
|---|---|---|---|---|---|---|---|---|---|---|
| Component (a) (% by mass) | Polyaniline complex 1 | 3 | 3 | 3 | 3 | 3 | 3 | 3 | 3 | 3 |
| Component (b) (% by mass) | m-Cresol | 24.2 | 24.2 | 24.2 | 24.2 | 24.2 | 24.2 | 24.2 | 24.2 | 24.2 |
| Component (c) (% by mass) | N300 | 0.3 | 0.1 | 0.51 | 1.01 | 2.02 | 3.03 | 4 | 5 | 6 |
| Component (e) (% by mass) | NSA | - | - | - | - | - | - | - | - | - |
| Component (d) (% by mass) | Tol | 68.9 | 69.1 | 68.7 | 68.2 | 67.2 | 66.3 | 65.4 | 64.4 | 63.5 |
| | IPA | 3.6 | 3.6 | 3.6 | 3.6 | 3.5 | 3.5 | 3.4 | 3.4 | 3.3 |
| Amount of component (b) (% by mass)/ amount of component (a) (% by mass) | | 8.1 | 8.1 | 8.1 | 8.1 | 8.1 | 8.1 | 8.1 | 8.1 | 8.1 |
| Amount of component (c) (% by mass)/ amount of component (a) (% by mass) | | 0.1 | 0.03 | 0.2 | 0.3 | 0.7 | 1.0 | 1.3 | 1.7 | 2.0 |
| Viscosity (mPa·s) | | 3.73 | 2.34 | 6.0 | 13 | 78.3 | 147 | 151 | 360 | 680 |
| Conductivity (S/cm) | | 128 | 133 | 109 | 62 | 33.7 | 12.1 | 3.1 | 1.1 | 0.6 |
| Viscosity ratio | | 2.1 | 1.3 | 3.4 | 7.3 | 44.0 | 82.6 | 84.8 | 202.2 | 382.0 |

Table 8

| | | Comparative Example 61 | Comparative Example 62 | Comparative Example 63 | Comparative Example 64 | Comparative Example 65 |
|---|---|---|---|---|---|---|
| Component (a) (% by mass) | Polyaniline complex 1 | 3 | 3 | 3 | 3 | 3 |
| Component (b) (% by mass) | m-Cresol | - | - | - | - | 24.2 |
| Component (c) | N300 | 0.1 | 0.3 | 2.03 | - | - |
| Component (e) (% by mass) | NSA | - | - | - | - | - |
| Component (d) (% by mass) | Tol | 92.1 | 91.9 | 90.2 | 92.2 | 69.2 |
| | IPA | 4.8 | 4.8 | 4.7 | 4.9 | 3.6 |
| Amount of component (b) (% by mass)/ amount of component (a) (% by mass) | | - | - | - | - | 8.1 |
| Amount of component (c) (% by mass)/ amount of component (a) (% by mass) | | 0.03 | 0.1 | 0.7 | - | - |
| Viscosity (mPa·s) | | 0.6 | 0.76 | 15.5 | 0.64 | 1.78 |
| Conductivity (S/cm) | | 0.1 | 0.1 | 0.03 | 0.229 | 151 |
| Viscosity ratio | | 0.3 | 0.4 | 8.7 | 0.4 | 1.0 |

Industrial Applicability

The composition of the present invention and the conductive film of the present invention can be used for capacitor, batterie, and the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

**1.** A composition comprising

(a) a conductive polymer,
(b) a phenolic compound,
(c) a thickener, and
(d) a solvent.

**2.** The composition according to claim 1, wherein the component (a) is a polyaniline complex in which a substituted or unsubstituted polyaniline is doped with a proton donor.

**3.** The composition according to claim 2, wherein the proton donor is a proton donor represented by the following formula (I):

M(XARn)m (I)

wherein in the formula (I), M is a hydrogen atom, an organic radical group or an inorganic radical group;

X is an acidic group; A is a hydrocarbon group which may contain a substituent;
R is independently a substituent represented by $-R^1$, $-OR^1$, $-COR^1$, $-COOR^1$, $-CO(COR^1)$, or $-CO(COOR^1)$;
$R^1$ is a hydrocarbon group which has 4 or more carbon atoms and which may contain a substituent, a silyl group, an alkylsilyl group, a group represented by $-(R^2O)_x-R^3$, or a group represented by $-(OSiR^3{}_2)_x-OR^3$ (wherein $R^2$ is an alkylene group, $R^3$ is independently a hydrocarbon group which may be the same as or different from each other, and x is an integer of 1 or more);
n is an integer of 2 or more; and
m is the valence of M.

**4.** The composition according to any one of claims 1 to 3, wherein the amount of the component (c) is 0.1% by mass or more based on 100% by mass of the entire composition.

**5.** The composition according to any one of claims 1 to 4, wherein the mass ratio of the amount of the component (a) to the amount of the component (c) is 1:0.01 to 1:2.

**6.** The composition according to any one of claims 1 to 5, wherein the component (c) is a polyether-based compound, or a cellulosic compound.

**7.** The composition according to any one of claims 1 to 6, wherein the viscosity thereof is 2 to 1,000 mPa·s.

**8.** A conductive film formed using the composition according to any one of claims 1 to 7.

**9.** A capacitor comprising the conductive film according to claim 8.

**10.** A battery comprising the conductive film according to claim 8.

Fig. 1

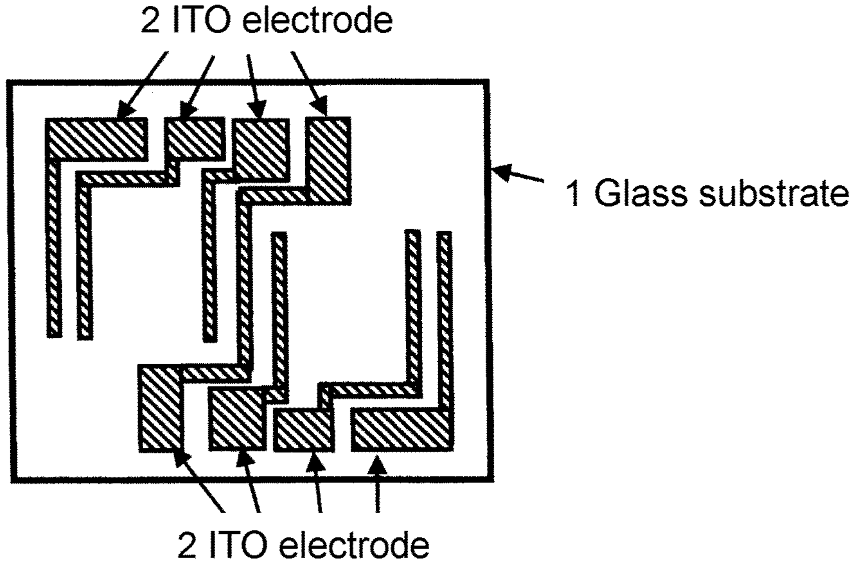
2 ITO electrode
1 Glass substrate
2 ITO electrode

Fig. 2

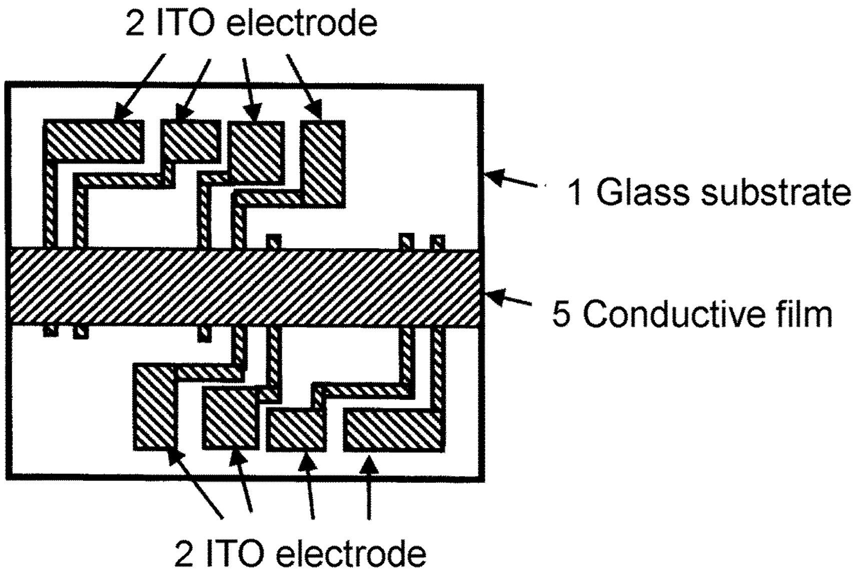
2 ITO electrode
1 Glass substrate
5 Conductive film
2 ITO electrode

Fig. 3

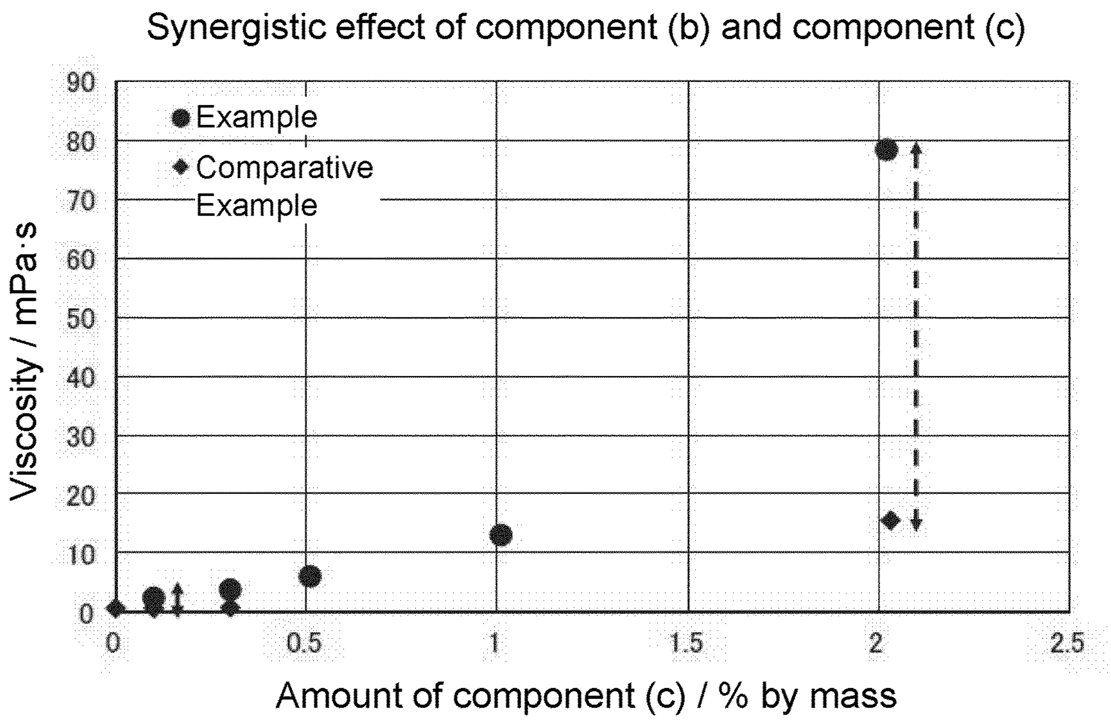
Synergistic effect of component (b) and component (c)
Example
Comparative Example
Viscosity / mPa·s
Amount of component (c) / % by mass
0
10
20
30
40
50
60
70
80
90
0
0.5
1
1.5
2
2.5

## INTERNATIONAL SEARCH REPORT

International application No.
**PCT/JP2023/018413**

### A. CLASSIFICATION OF SUBJECT MATTER

***C08L 101/12***(2006.01)i; ***C08K 5/13***(2006.01)i; ***C08L 1/00***(2006.01)i; ***C08L 71/02***(2006.01)i; ***C08L 79/00***(2006.01)i; ***H01B 1/12***(2006.01)i; ***H01B 1/20***(2006.01)i; ***H01B 5/14***(2006.01)i; ***H01G 9/028***(2006.01)i; ***H01G 9/15***(2006.01)i; ***H01G 11/56***(2013.01)i; ***H01M 4/66***(2006.01)i

FI: C08L101/12; C08K5/13; C08L1/00; C08L79/00 A; C08L71/02; H01B1/20 A; H01B1/12 G; H01B5/14 Z; H01M4/66 A; H01G9/15; H01G9/028 G; H01G11/56

According to International Patent Classification (IPC) or to both national classification and IPC

### B. FIELDS SEARCHED

Minimum documentation searched (classification system followed by classification symbols)

C08L101/12; C08K5/13; C08L1/00; C08L71/02; C08L79/00; H01B1/12; H01B1/20; H01B5/14; H01G9/028; H01G9/15; H01G11/56; H01M4/66

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | JP 2021-113286 A (IDEMITSU KOSAN CO., LTD.) 05 August 2021 (2021-08-05) claims, paragraph [0100], examples | 1-10 |
| X | JP 2009-84554 A (IDEMITSU KOSAN CO., LTD.) 23 April 2009 (2009-04-23) claims, paragraphs [0010]-[0030], [0048], [0084], examples | 1-10 |
| A | JP 2019-112499 A (IDEMITSU KOSAN CO., LTD.) 11 July 2019 (2019-07-11) | 1-10 |
| A | JP 2003-183389 A (COMMISSARIAT ENERGIE ATOMIQUE) 03 July 2003 (2003-07-03) | 1-10 |
| A | WO 2014/106884 A1 (IDEMITSU KOSAN CO., LTD.) 10 July 2014 (2014-07-10) | 1-10 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/018413**

| Patent document cited in search report | Publication date (day/month/year) | Patent family member(s) | Publication date (day/month/year) |
|---|---|---|---|
| JP 2021-113286 A | 05 August 2021 | (Family: none) | |
| JP 2009-84554 A | 23 April 2009 | WO 2009/034816 A1 | |
| | | TW 200914536 A | |
| JP 2019-112499 A | 11 July 2019 | (Family: none) | |
| JP 2003-183389 A | 03 July 2003 | US 2003/0091845 A1 | |
| | | EP 1302506 A1 | |
| | | FR 2830535 A1 | |
| WO 2014/106884 A1 | 10 July 2014 | US 2015/0340119 A1 | |
| | | EP 2942372 A1 | |
| | | CN 104919005 A | |
| | | KR 10-2015-0105325 A | |
| | | TW 201439149 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012102017 A1